# EUROPEAN PATENT APPLICATION

(11) **EP 4 844 567 A1**
(43) Date of publication of application: **25.11.2026**
(21) Application number: 26170949.7
(22) Date of filing: 07.04.2026
(51) Int. Cl.: G06F 3/16, G06V 10/00, G10L 15/00

(54) **METHOD, APPARATUS, DEVICE, AND STORAGE MEDIUM FOR DETERMINING RESPONSE**

(30) Priority: 19.05.2025 CN 202510645261
(71) Applicant: Beijing Zitiao Network Technology Co., Ltd., Beijing 100190 (CN)
(72) Inventor: Cai, Wei, Beijing 100028 (CN); Zhao, Weize, Beijing 100028 (CN); Zhang, Hao, Beijing 100028 (CN); Qiao, Wende, Beijing 100028 (CN); Ding, Xiaopeng, Beijing 100028 (CN); Shi, Jian, Beijing 100028 (CN); Liang, Jianbin, Beijing 100028 (CN)
(74) Representative: Marks & Clerk LLP

(57) **Abstract**

Embodiments of the disclosure provide a method, an apparatus, a device, and a storage medium for determining a response. The method includes: acquiring, by a wearable device, a first set of images in response to the wearable device detecting a first voice; determining whether the first voice indicates an image acquisition requirement; and determining, based at least on the first set of images and the first voice, a response output by the wearable device in response to a determination that the first voice indicates the image acquisition requirement.

## Description

### TECHNICAL FIELD

Example embodiments of the present disclosure generally relate to the field of computers, and in particular, to a method, an apparatus, a device, a computer-readable storage medium, and a computer-executable instruction product for determining a response.

### BACKGROUND

With the development of electronic information technologies, interaction manners of wearable devices (such as a watch, a pair of glasses, a headphone, a bracelet, a ring, and the like) are becoming more intelligent and diversified. The wearable devices not only support interaction through traditional physical contact (such as pressing a button, touching, and the like), but also support interaction based on voice, gestures, images, and the like. Furthermore, some wearable devices even attempt to understand user requirements based on voice information, visual information, or the like, in order to implement natural human-computer conversations. However, the traditional wearable devices still need to be improved in terms of naturalness and authenticity of human-computer interaction.

### SUMMARY

In a first aspect of the present disclosure, a method for determining a response is provided. The method includes: acquiring, by a wearable device, a first set of images in response to the wearable device detecting a first voice; determining whether the first voice indicates an image acquisition requirement; and determining, based at least on the first set of images and the first voice, a response output by the wearable device in response to a determination that the first voice indicates the image acquisition requirement.

In a second aspect of the present disclosure, an apparatus for determining a response is provided. The apparatus includes: an acquiring module configured to acquire, by a wearable device, a first set of images in response to the wearable device detecting a first voice; a first determining module configured to determine whether the first voice indicates an image acquisition requirement; and a second determining module configured to determine, based at least on the first set of images and the first voice, a response output by the wearable device in response to a determination that the first voice indicates the image acquisition requirement.

In a third aspect of the present disclosure, a wearable device is provided. The device includes: a controller configured to perform the method of the first aspect; at least one audio collector configured to perform acquisition of audios under control of the controller; and at least one image collector configured to perform acquisition of images under control of the controller.

In a fourth aspect of the present disclosure, an electronic device is provided. The device includes at least one processor; and at least one memory coupled to the at least one processor and storing instructions executable by the at least one processor, the instructions, when executed by the at least one processor, causing the device to perform the method of the first aspect.

In a fifth aspect of the present disclosure, a computer-readable storage medium is provided. The computer-readable storage medium having computer-executable instructions stored thereon, the computer-executable instructions being executable by a processor to implement the method of the first aspect.

In a sixth aspect of the present disclosure, a computer program product is provided, including computer-executable instructions, the computer-executable instructions, when executed by a processor, implement the method of the first aspect.

It should be appreciated that the content described in this Summary section is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference numerals refer to the same or similar elements, where:
FIG. 1 shows a schematic diagram of an example environment in which the embodiments according to the present disclosure may be implemented;
FIG. 2 shows a flowchart of a process for determining a response according to some embodiments of the present disclosure;
FIG. 3 shows a flowchart of an example process for determining a response according to some embodiments of the present disclosure;
FIG. 4 shows a flowchart of an example process for determining a response according to some other embodiments of the present disclosure;
FIG. 5 shows a schematic diagram of an example architecture of a wearable device according to some embodiments of the present disclosure;
FIG. 6 shows a schematic structural block diagram of an example apparatus for determining a response according to some embodiments of the present disclosure; and
FIG. 7 shows a block diagram of an electronic device capable of implementing multiple embodiments of the present disclosure.

### DETAILED DESCRIPTION OF EMBODIMENTS

The embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and embodiments of the present disclosure are only for illustrative purposes, and are not intended to limit the protection scope of the present disclosure.

In the description of the embodiments of the present disclosure, the term "include/comprise" and similar terms thereof should be understood as open-ended inclusions, that is, "include/comprise but not limited to". The term "based on" should be understood as "at least partially based on". The term "an embodiment" or "the embodiment" should be understood as "at least one embodiment". The term "some embodiments" should be understood as "at least some embodiments". The following may also include other explicit and implicit definitions.

As used herein, unless explicitly stated, performing a step "in response to A" does not mean that the step is performed immediately after "A", but may include one or more intermediate steps.

It may be understood that the data involved in the technical solution (including but not limited to the data itself, acquisition or use of the data) should comply with requirements of corresponding laws, regulations, and related provisions.

It may be understood that before using the technical solution disclosed in the embodiments of the present disclosure, the user should be informed of the type, range of use, use scenarios, etc., of personal information involved in the present disclosure and obtain the authorization of the user in an appropriate manner in accordance with relevant laws and regulations.

For example, in response to receiving an active request from a user, prompt information is sent to the user to clearly prompt the user that the requested operation will require access to and use of the user's personal information, so that the user may independently choose whether to provide the personal information to software or hardware, such as an electronic device, an application, a server, or a storage medium, that performs the operations of the technical solution of the present disclosure based on the prompt information.

As an optional but non-limiting implementation, in response to receiving the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It may be understood that the above process of notifying and obtaining user authorization is only illustrative, and does not limit the implementations of the present disclosure. Other manners that satisfy the relevant laws and regulations may also be applied in the implementations of the present disclosure.

As used herein, the term "model" may learn a correlation between corresponding inputs and outputs from training data, so that a corresponding output may be generated for a given input after the training is completed. The generation of the model may be based on machine learning techniques. Deep learning is a machine learning algorithm that uses multiple layers of processing units to process inputs and provide corresponding outputs. A neural network model is an example of a model based on deep learning. As used herein, a "model" may also be referred to as a "machine learning model", a "learning model", a "machine learning network", or a "learning network", which terms are used interchangeably herein.

A "neural network" is a machine learning network based on deep learning. A neural network CAN process inputs and provide corresponding outputs, and generally includes an input layer and an output layer, and one or more hidden layers between the input layer and the output layer. Neural networks used in deep learning applications typically include many hidden layers, thereby increasing the depth of the network. The layers of the neural network are connected in sequence, so that the output of a previous layer is provided as the input of a next layer, where the input layer receives the input of the neural network, and the output of the output layer serves as the final output of the neural network. Each layer of the neural network includes one or more nodes (also referred to as processing nodes or neurons), each of which processes input from the previous layer.

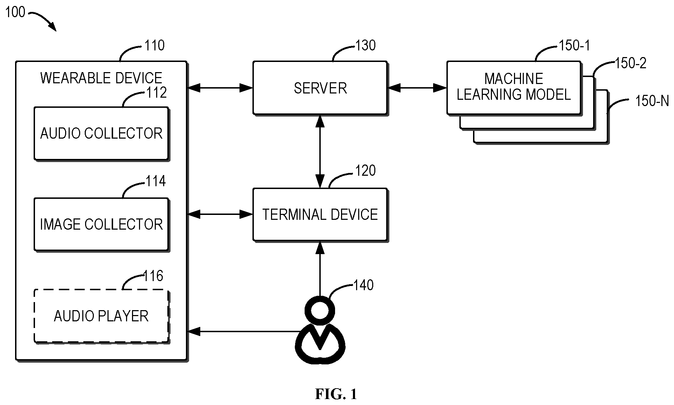

FIG. 1 shows a schematic diagram of an example environment 100 in which the embodiments of the present disclosure may be implemented. In the environment 100 of FIG. 1, a wearable device 110 is deployed with an audio collector 112 and an image collector 114. The wearable device 110 may use the audio collector 112 to acquire audio, and may also use the image collector 114 to acquire images.

In some embodiments, the wearable device 110 may also be deployed with an audio player 116. The wearable device 110 may interact with a user 140 based on the audio collector 112, the image collector 114, and the audio player 116. For example, the wearable device 110 may use the audio collector 112 to collect voice of the user or use the image collector 114 to collect images of the surroundings. The wearable device 110 may generate voice for responding to the user 140 based on the acquired voice or images. Then, the wearable device 110 may use the audio player 116 to play the generated voice, so as to implement human-computer conversations with the user 140. Certainly, the wearable device 110 may also be deployed with any other appropriate components, which is not limited in the embodiments of the present disclosure.

In some embodiments, the wearable device 110 may include various portable electronic devices that may be directly worn on the body of the user 140 or integrated into the clothing or accessories of the user 140, such as a watch, a bracelet, a pair of glasses, a headphone, clothing, a ring, or a necklace, and the like. As an example, the wearable device 110 may include two headphones, each of which may be deployed with the audio collector 112 (such as a microphone or a microphone array) and the image collector 114 (such as a camera). It should be understood that the above wearable device 110 is only illustrative, and the wearable device 110 may be implemented as any appropriate wearable portable electronic device.

In some embodiments, the wearable device 110 may communicate with a terminal device 120 to enable control of the wearable device 110 or support functions of the wearable device 110. In some examples, the user 140 may send a control instruction to the wearable device 110 through the terminal device 120 to control the wearable device 110. As an example, the user 140 may control the audio collector 112 or the image collector 114 of the wearable device 110 through the terminal device 120. In some examples, data transmission may be performed between the wearable device 110 and the terminal device 120, for example, the wearable device 110 may transmit the acquired audio or images to the terminal device 120, or the wearable device 110 may receive audio, images, videos, etc. from the terminal device 110. In some embodiments, the wearable device 110 may also directly communicate with a server 130 or indirectly communicate with the server 130 through the terminal device 120 to support the functions of the wearable device 110. For example, the wearable device 110 may use the server 130 to process voice or images, or the wearable device 110 may use the server 130 to generate a response to the user 140.

In some embodiments, the wearable device 110 may also use one or more machine learning models 150 to support interaction with the user 140, for example, the one or more machine learning models 150 may include a machine learning model 150-1, a machine learning model 150-2, ..., a machine learning model 150-N, etc., where N is a positive integer. For the convenience of description, the one or more machine learning models are collectively referred to as a machine learning model 150 herein. In some examples, the wearable device 110 may use the machine learning model 150 for speech recognition. In some other examples, the wearable device 110 may use the machine learning model 150 to generate a response (e.g., a response voice) to the user 140 based on images or voice acquired by the wearable device 110. In some embodiments, as shown in FIG. 1, the one or more machine learning models 150 may be deployed on the server 130 associated with the wearable device 110. The wearable device 110 may invoke the machine learning model 150 through the server 130 to support interaction with the user 140 based on a model output of the machine learning model 150. Certainly, the one or more machine learning models 150 may also be deployed locally on the wearable device 110 or on the terminal device 120 related to the wearable device 110. The wearable device 110 may invoke the local machine learning model 150 to support interaction with the user 140, or the wearable device 110 may invoke the machine learning model 150 through the terminal device 120 to support interaction with the user 140.

The machine learning model 150 may be a different type of model. In some embodiments, the one or more machine learning models 150 may be constructed based on a language model (LM). The machine learning model used is a content generation model that may generate a corresponding output based on model input. In some embodiments, the machine learning model based on the language model can perform a model input in a text modal (e.g., a natural language and/or a machine language) and/or a model input in a non-text modal (e.g., an image, a voice, a video, etc.), and can generate desired output according to the model input and prompts. The prompt here is used to guide the machine learning model to generate a solution to a user requirement indicated by the model input. In an application scenario for supporting user question answering, the input of the user 140 may be provided to the machine learning model 150 as at least a part of the model input (other parts may include the prompts). The user input is treated as a question. Based on the model output, a corresponding response may be generated and provided to the user 140.

In some embodiments, the one or more machine learning models 150 may be voice-related models, including a speech recognition (ASR) model and a text-to-speech (TTS) model. The input of the ASR model is voice, and the output is text. The input of the TTS model is text, and the output is corresponding voice.

In some embodiments, the terminal device 120 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the foregoing, including fittings and peripherals of these devices or any combination thereof. In some embodiments, the terminal device 120 may also support any type of user-specific interface (such as "wearable" circuitry, etc.). The server 130 may be various types of computing systems/servers that may provide computing power, including but not limited to mainframes, edge computing nodes, computing devices in cloud environments, and so on. The server 130 may be implemented based on, for example, a cloud environment.

It should be understood that the structure and functions of the environment 100 are described for illustrative purposes only, and are not intended to imply any limitation to the scope of the present disclosure.

As mentioned above, with the development of electronic information technologies, interaction manners of wearable devices (such as a watch, a pair of glasses, a headphone, a bracelet, a ring, and the like) are becoming more intelligent and diversified. The wearable devices not only support interaction through traditional physical contact (such as pressing, touching, and the like), but also support interaction based on voice, gesture, image, and the like. Furthermore, some wearable devices even attempt to understand user requirements based on voice information, visual information, or the like, in order to implement natural human-computer conversations.

For example, in some application scenarios, a user may ask a question to a wearable device based on voice (for example, "what is the XXXX in front"). The wearable device recognizes whether there is an intention to take a photo from the voice. If the intention to take a photo is recognized, a photo taking operation is triggered. Then the question of the user is answered based on the shot photo. However, in such an interaction manner, the waiting time for the feedback response of the wearable device is long, and thus the naturalness and authenticity of human-computer conversations need to be improved.

In view of this, the embodiments of the present disclosure provide an improved solution for determining a response. In the improved solution, if a wearable device detects a first voice, a first set of images are acquired by the wearable device. It is determined whether the first voice indicates an image acquisition requirement. If it is determined that the first voice indicates the image acquisition requirement, a response output by the wearable device is determined based at least on the first set of images and the first voice.

In the embodiments of the present disclosure, the wearable device acquires images (i.e., takes photos) in response to recognizing the voice of the user, without waiting for the recognition of an image acquisition requirement. If the image acquisition requirement is recognized from the voice, a response to the voice is determined based on the acquired images. In this way, photo taking and recognition of the image acquisition requirement are implemented in parallel to some extent, which is beneficial to reducing the waiting time for the response, and thus improving the naturalness and authenticity of human-computer conversations.

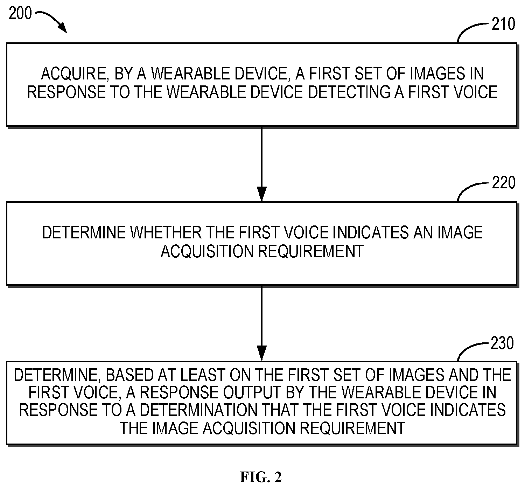

Some example embodiments of the present disclosure will be described below with continued reference to the drawings. FIG. 2 shows a flowchart of a process 200 for determining a response according to some embodiments of the present disclosure. The process 200 may be implemented at the wearable device 110, or the process 200 may also be implemented by the terminal device 120 or the server 130.

At block 210, if the wearable device 110 detects a first voice, a first set of images are acquired by the wearable device 110. The first voice may include, but is not limited to, voice uttered by a wearer of the wearable device 110, for example, the first voice may be voice of the user 140. The first set of images may include one or more images. In some examples, if the wearable device 110 may include one image collector 114, the one or more images may be acquired using the image collector 114. If the wearable device 110 includes a plurality of image collectors 114, the one or more images may be acquired using the plurality of image collectors 114, respectively.

As an example, the wearable device 110 may include two headphones. The image collector 114 (such as a camera) may be respectively deployed on each of the two headphones. If at least one of the two headphones (e.g., a main headphone of the two headphones) detects the voice of the user 140, the image collectors 114 of the two headphones are controlled to respectively acquire images to obtain a first set of images including two sets of images acquired by the two headphones.

As another example, if the voice of the user 140 is detected, images may be acquired by the image collector 114 on at least one of the two headphones that is in the wearing state. Certainly, the wearable device 110 is not limited to a headphone, and the wearable device 110 may also include, for example, a pair of glasses, clothing, a necklace, etc. The embodiments of the present disclosure do not limit the type of the wearable device 110.

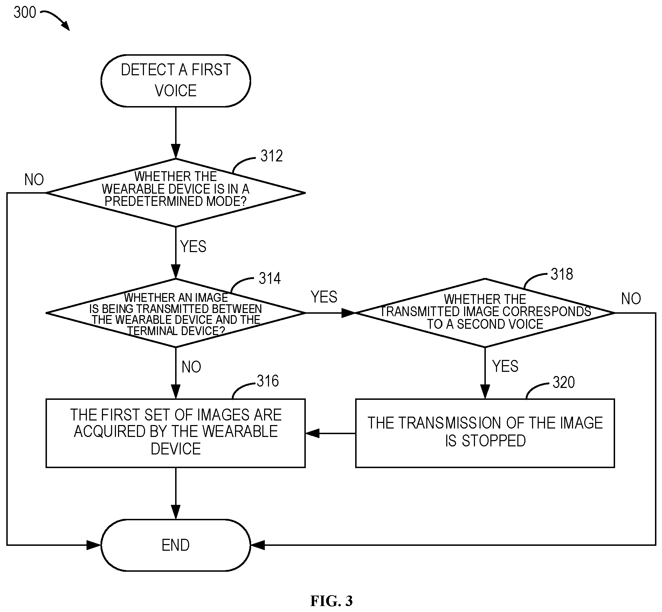

FIG. 3 shows a flowchart of an example process 300 for determining a response according to some embodiments of the present disclosure. For the convenience of discussion, the process 300 will be described from the perspective of the wearable device 110, but this is only illustrative, and the process 300 may also be implemented at the terminal device 120 or the server 130, which is not limited in the embodiments of the present disclosure.

Referring to FIG. 3, if the wearable device 110 detects the first voice, at block 312, it is determined whether the wearable device 110 is in a predetermined mode (which may also be referred to as a "speak-to-shoot" mode). If it is determined that the wearable device 110 is in the predetermined mode, the process 300 may proceed to block 316. At block 316, the wearable device 110 acquires a first set of images. The predetermined mode here may be a usage mode that requires the user 140 to actively enable, or a usage mode that is enabled with the authorization of the user 140. In this case, if it is determined that the wearable device 110 is in the predetermined mode, it may be considered that the wearable device 110 has obtained the authorization of the user 140 to allow the wearable device 110 to acquire images. As an example, a user interface of the wearable device 110 or a user interface of the terminal device 120 communicatively connected to the wearable device 110 may be provided with an option for enabling the predetermined mode, and the option may be configured to be in a default unselected state. If the user 140 desires to enable the predetermined mode, the user 140 may select the option. The wearable device 110 or the terminal device 120 may control the wearable device 110 to enter the predetermined mode in response to the selection of the option by the user 140.

In some embodiments, still referring to FIG. 3, if it is determined at block 312 that the wearable device 110 is in the predetermined mode, the process 300 may also proceed to block 314. At block 314, it is determined whether an image (which may sometimes be referred to as a fifth set of images herein) is being transmitted between the wearable device 110 and the terminal device 120. If it is determined at block 314 that no image is being transmitted between the wearable device 110 and the terminal device 120, the process 300 may proceed to block 316, where the first set of images are acquired by the wearable device 110. If it is determined that an image is being transmitted between the wearable device 110 and the terminal device 120, the process 300 may proceed to block 318. At block 318, it is determined whether the transmitted image corresponds to a second voice detected prior to the first voice. If it is determined that the transmitted image corresponds to the second voice, the process 300 proceeds to block 320, where the transmission of the image is stopped. Then, the process 300 proceeds to block 316, where the first set of images are acquired by the wearable device 110. In a human-computer conversation scenario, the first voice may be understood as voice corresponding to a current conversation turn, and the second voice may be understood as voice corresponding to a previous conversation turn. If an image of the previous conversation turn is being transmitted between the wearable device 110 and the terminal device 120, it indicates that the conversation process of the previous conversation turn has not been completed. In this case, if the wearable device 110 detects the voice of the user 140 (i.e., the first voice) again, it indicates that the user 140 may desire to interrupt the conversation of the previous conversation turn. At this time, by stopping the transmission of the previously acquired image, it is beneficial to quickly acquire and transmit the image corresponding to the current conversation turn (i.e., the first set of images), thereby ensuring that the human-computer conversation may be executed based on the image that is more related to the conversation.

In some examples, if it is determined at block 314 that an image is being transmitted between the wearable device 110 and the terminal device 120, the wearable device 110 may also determine whether the transmitted image is an image acquired by the wearable device 110 in response to a photo taking operation actively triggered by the user 140. If the transmitted image is an image acquired by the wearable device 110 in response to the photo taking operation actively triggered by the user 140, it indicates that the user 140 desires to acquire such an image, and the first voice may be a question raised by the user 140 for the image. In this case, the wearable device 110 may give up acquiring the first set of images, and the wearable device 110 may send a response request to the terminal device 120 based on the first voice. The terminal device 120 may determine a response to the first voice based on the first voice and the fifth set of images.

Returning to the process 200, at block 220, it is determined whether the first voice indicates an image acquisition requirement. The image acquisition requirement here may represent that the user 140 desires the wearable device 110 to acquire images. In some cases, the image acquisition requirement may also be referred to as an intention to take a photo. In some embodiments, the determination of the image acquisition requirement may be implemented by the wearable device 110. After detecting the first voice, the wearable device 110 may determine whether the first voice indicates the image acquisition requirement.

In some embodiments, the determination of the image acquisition requirement may be implemented by the terminal device 120. After detecting the first voice, the wearable device 110 may send, to the terminal device 120, a determination request for the image acquisition requirement based on the first voice, where the determination request includes at least the first voice. The terminal device 120 may determine whether the first voice indicates the image acquisition requirement in response to the determination request.

In some embodiments, the wearable device 110 may detect whether the first voice includes a keyword indicating the image acquisition requirement. If the keyword is detected from the first voice, the wearable device 110 determines that the first voice indicates the image acquisition requirement. If no keyword is detected from the first voice, the wearable device 110 determines that the first voice does not indicate the image acquisition requirement. The keyword may include various words that may indicate the image acquisition requirement, such as look closely, look again, look at, have a look, scan, take a photo, take a picture, take a photograph, take a video, shoot, capture, take a shot, take a photo, and the like. Based on keyword recognition, whether the voice indicates the image acquisition requirement may be detected efficiently and quickly. Certainly, the detection of the keyword may also be implemented at the terminal device 120.

In some embodiments, the wearable device 110 may also use a trained machine learning model 150-1 (which may sometimes be referred to as a second machine learning model herein) to determine whether the first voice indicates the image acquisition requirement. Specifically, the wearable device 110 may provide the first voice to the machine learning model 150-1. Then, based on a model output of the machine learning model 150-1, it is determined whether the first voice indicates the image acquisition requirement. In this way, the accuracy of detecting the image acquisition requirement may be improved. Especially in the case that the semantics of the first voice is ambiguous, it is still possible to accurately detect whether the first voice indicates the image acquisition requirement.

In some examples, the machine learning model 150-1 may also be deployed at the terminal device 120 or the server 130. As an example, the wearable device 110 may detect whether the first voice includes a keyword indicating the image acquisition requirement. If no keyword is detected from the first voice, the wearable device 110 may send a determination request for the image acquisition requirement to the terminal device 120 based on the first voice. The terminal device 120 may send a determination request for the image acquisition requirement to the server 130 based on the first voice, and the server 130 uses the machine learning model 150-1 to determine whether the first voice indicates the image acquisition requirement. This is not only beneficial to improving the accuracy of detecting the image acquisition requirement, but also to improving the detection efficiency. It should be understood that the above detection strategy for the image acquisition requirement is only illustrative, and any other appropriate detection strategy may be selected to detect whether the first voice indicates the image acquisition requirement according to actual needs, which is not limited in the embodiments of the present disclosure.

In some embodiments, the wearable device 110 may output a first prompt, and the first set of images may be prompted to be acquired by the wearable device 110 through the first prompt. The first prompt may include, but is not limited to, an audible prompt, a light prompt, a tactile prompt (such as vibration), and so on. In some examples, the wearable device 110 may output the first prompt in response to the acquisition of the first set of images. In some other examples, the wearable device 110 may output the first prompt in response to determining that the first voice indicates the image acquisition requirement.

Still referring to FIG. 2, at block 230, if it is determined that the first voice indicates the image acquisition requirement, a response output by the wearable device 110 is determined based at least on the first set of images and the first voice. In some embodiments, the response determination process may be implemented at the wearable device 110. That is, if it is determined that the first voice indicates the image acquisition requirement, the wearable device 110 may determine a response to the first voice based on the first set of images and the first voice.

In some examples, the wearable device 110 may determine, based on the first set of images and the first voice, prompt information for a trained machine learning model 150-2 (which may sometimes be referred to as a first machine learning model herein). The wearable device 110 may provide the prompt information to the machine learning model 150-2 to obtain a model output of the machine learning model 150-2. The response to the first voice may be determined based on the model output.

As an example, the wearable device 110 may determine a response text for the first voice based on the model output. The wearable device 110 may use a TTS model to determine a response voice based on the response text. Then, the wearable device 110 may use the audio player 116 to play the response voice, for example, the response voice may be played through a speaker of the headphone.

In some embodiments, the response determination process may be implemented at the terminal device 120 or the server 130. In this case, the wearable device 110 may transmit the first set of images to the terminal device 120 in response to a determination that the first set of images have been acquired. That is, after the first set of images are acquired, the wearable device 110 immediately transmits the first set of images to the terminal device 120 based on a communication connection (such as Bluetooth or a WIFI network) between the wearable device 110 and the terminal device 120. After it is determined that the first voice indicates the image acquisition requirement, the terminal device 120 may determine a response to the first voice based on the first set of images that are local to the terminal device 120. The process of transmitting the first set of images from the wearable device 110 to the terminal device 120 and the process of determining the image acquisition requirement are implemented in parallel to some extent, which is beneficial to reducing the waiting time for the response.

In some examples, the wearable device 110 may also transmit the first set of images to the terminal device 120 in response to a determination that the first voice indicates the image acquisition requirement. Specifically, after the wearable device 110 acquires the first set of images, the wearable device 110 may temporarily store the first set of images locally on the wearable device 110. After it is determined that the first voice indicates the image acquisition requirement, the wearable device 110 transmits the first set of images to the terminal device 120. In this way, in the case that it is determined that the first voice does not indicate the image acquisition requirement, there is no need to transmit the first set of images, which is beneficial to reducing network resource consumption and power consumption of the wearable device 110.

In some embodiments, the wearable device 110 may detect an occluded area of each image in the first set of images. If a detection result indicates that a proportion of the occluded area in the image does not exceed a proportion threshold, the wearable device 110 may determine a response to the first voice based on the first set of images, or the wearable device 110 may transmit the first set of images to the terminal device. If the detection result indicates that the proportion of the occluded area in the image exceeds the proportion threshold, the wearable device 110 may remove visual content corresponding to the occluded area, or the wearable device 110 may output a prompt to remind the user to trigger image acquisition, i.e., remind the user to take a photo again. In this way, it is beneficial to ensure the accuracy and quality of the response.

In some embodiments, if the wearable device 110 determines that the first voice indicates the image acquisition requirement, the wearable device 110 may send a response request (which may sometimes be referred to as a first request herein) to the terminal device 120. In the case that the first set of images have been transmitted to the terminal device 120 in advance, the response request may include the first voice. In the case that the first set of images have not been transmitted to the terminal device 120, the response request may include the first voice and the first set of images. The terminal device 120 may determine a response (e.g., a response voice) to the first voice based on the first voice and the first set of images in response to the response request. The wearable device 110 may receive the response from the terminal device 120, and then the wearable device 110 may output the response, for example, play the response voice, display the response text, and the like.

In some examples, the terminal device 110 may determine, based on the first voice and the first set of images, prompt information for the machine learning model 150-2 in response to the response request. The terminal device 110 may determine the response to the first voice by providing the prompt information to the machine learning model 150-2.

In some embodiments, the machine learning model 150-2 may also be deployed on the server 130. If it is determined that the first voice indicates the image acquisition requirement, the terminal device 120 transmits a response request (which may sometimes be referred to as a second request herein) to the server 130 based at least on the first set of images. The response request includes at least the first voice and the first set of images. The server 130 determines a response to the first voice based at least on the first voice and the first set of images. The terminal device 120 receives the response to the first voice from the server 130, and then sends the response to the wearable device 110. The wearable device 110 may output the response. Since the server 130 has more sufficient computing power resources, a model with a larger parameter scale may be deployed. Generating the response through the model deployed on the server 130 is beneficial to improving the quality and accuracy of the response.

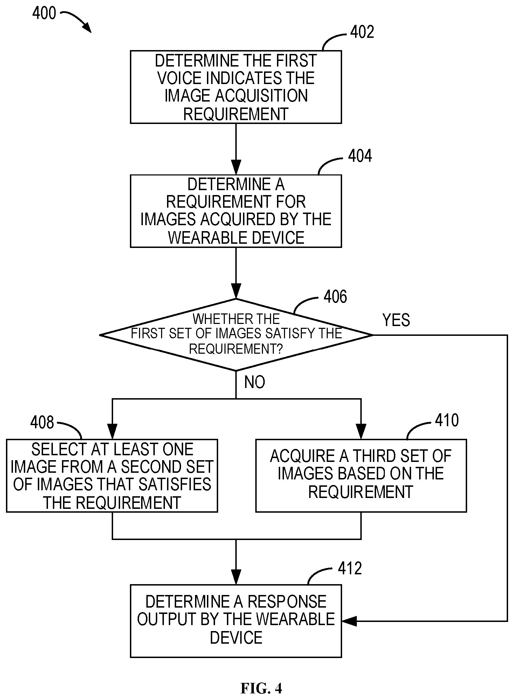

FIG. 4 shows a flowchart of an example process 400 for determining a response according to some embodiments of the present disclosure. For the convenience of discussion, the process 400 will be described from the perspective of the wearable device 110, but this is only illustrative, and the process 400 may also be implemented at the terminal device 120 or the server 130, which is not limited in the embodiments of the present disclosure.

Referring to FIG. 4, if it is determined at block 402 that the first voice indicates the image acquisition requirement, the process 400 may proceed to block 404, where the wearable device 110 may determine, based on the first voice, a requirement for images acquired by the wearable device 110. At block 406, the wearable device 110 may determine whether the first set of images satisfy the requirement. If it is determined at block 406 that the first set of images satisfy the requirement, the process 400 may proceed to block 412. At block 412, the wearable device 110 may determine a response to the first voice based on the first set of images and the first voice. In this way, the quality and accuracy of the response may be guaranteed, and the accuracy of the response may be prevented from being affected or re-shooting being triggered subsequently due to the images not meeting the requirements.

Here, the requirement for the images acquired by the wearable device may include various requirements related to the images, for example, requirements for image clarity, shooting time, shooting direction, image content, and the like. As an example, the wearable device 110 may use a trained machine learning model 160-3 to determine, based on the first voice, a requirement for images acquired by the wearable device 110. If the first voice includes "XXX, please take a close look at what YYY is", it indicates that the user 140 desires the wearable device 110 to acquire images with high definition, so that details in the images may be identified. The wearable device 110 may determine that the requirement indicates that the images acquired by the wearable device 110 should meet a first resolution. The wearable device 110 may determine whether the first set of images meet the first resolution. If the first set of images meet the first resolution, a response to the first voice is determined based on the first set of images and the first voice.

In some embodiments, referring to FIG. 4, if it is determined at block 406 that the first set of images do not satisfy the requirement, the process 400 proceeds to block 408. At block 408, the wearable device 110 selects at least one image from a second set of images acquired by the wearable device 110 prior to the first set of images based on the requirement. The second set of images may include one or more images acquired prior to the first set of images. In some cases, the second set of images may also be understood as historical images. As an example, if the first voice includes "XXX, do you still remember what was next to the XXX you saw before", it indicates that the question of the user 140 is related to the content previously seen, and the wearable device 110 may determine that the requirement indicates that the shooting time of the images is before the first voice and includes an object "XXX". The wearable device 110 may select at least one image including the object "XXX" from the historical images. Then, the wearable device 110 may determine a response to the first voice based on the at least one image and the first voice.

In some embodiments, still referring to FIG. 4, if it is determined at block 406 that the first set of images do not satisfy the requirement, the process 400 may also proceed to block 410. At block 410, the wearable device 110 may acquire a third set of images based on the requirement. Then, a response to the first voice is determined based on the third set of images and the first voice. As an example, the requirement for the images acquired by the wearable device 110 may indicate that the images acquired by the wearable device 110 should meet a first resolution. If the first set of images do not meet the first resolution, the wearable device 110 may adjust the resolution of the image collector 114, and use the adjusted image collector 114 to acquire a third set of images that meet the first resolution. Then, the wearable device 110 may determine a response to the first voice based on the first voice and the third set of images.

In some embodiments, if it is determined that the first voice indicates the image acquisition requirement, the wearable device 110 determines whether the first set of images have been transmitted to the terminal device 120. If it is determined that the first set of images have been transmitted to the terminal device 120, a fourth set of images are acquired by the wearable device 110. Then, the wearable device 110 may send a response request (which may sometimes be referred to as a first request herein) to the terminal device 120, where the response request includes at least the first voice and the fourth set of images. The terminal device 120 may determine a response to the first voice based on the first voice, the first set of images and the fourth set of images in response to the response request. Since the first set of images have already been transmitted when the image acquisition requirement (i.e., the intention to take a photo) is recognized, although re-shooting and transmitting the fourth set of images will have a certain impact on the waiting time for the response, the number of images may be increased, which is beneficial to improving the accuracy of the response.

As an example, the terminal device 120 may determine, based on the first voice, the first set of images and the fourth set of images, prompt information for the machine learning model 150-2. The terminal device 120 may determine the response to the first voice by providing the prompt information to the machine learning model 150-2. As another example, the terminal device 120 may send a response request to the server 130 based on the first voice, the first set of images and the fourth set of images. The server 130 may determine, in response to the response request, a response text to the first voice using the machine learning model 150-2 deployed on the server 130. The server 130 may also use a TTS model to determine a response voice based on the response text, and the server 130 may feed back the response voice to the wearable device 110 through the terminal device 120. Assuming that the wearable device 110 is a headphone or a pair of glasses with a speaker, the headphone or the glasses may play the response voice.

In some embodiments, if it is determined that the first set of images does not include the content described by the first voice, a second prompt is output by the wearable device 110, and the user 140 is prompted to trigger image acquisition through the second prompt. That is, the user 140 is prompted to re-acquire images through the second prompt. As an example, if it is determined that the first set of images does not include the content described by the first voice, the machine learning model 150-2 may output a predetermined prompt, such as "please let XXX take another look", etc. The wearable device 110 may play voice corresponding to the predetermined prompt to remind the user 140 to trigger an image acquisition operation. If the wearable device 110 detects, for example, "XXX, please take another look", the wearable device 110 determines that an image acquisition instruction is received, and uses the image collector 114 to re-acquire images. Then, the response to the first voice may be determined based on the re-acquired images and the first voice. In this way, if the response cannot be generated based on the acquired images, the user may be prompted to re-acquire images so that the correct response may be output.

In some embodiments, if it is determined that the first voice does not indicate the image acquisition requirement, a response output by the wearable device 110 may be determined based on the first voice, and the wearable device 110 may discard the first set of images. If the first set of images have been transmitted to the terminal device 120, the terminal device 120 may also discard the first set of images.

It should be noted that although the process 200, the process 300 and the process 400 are described from the perspective of the wearable device 110 in the above examples, in an actual application scenario, the process 200, the process 300 and the process 400 may also be implemented at the terminal device 120 or the server 130. In addition, the machine learning model 150-1, the machine learning model 150-2 and the machine learning model 150-3 may be implemented as the same or different models, which is not limited in the embodiments of the present disclosure.

In this way, in the embodiments of the present disclosure, the wearable device acquires images (i.e., takes photos) in response to recognizing the voice of the user, without waiting for the recognition of an image acquisition requirement. If the image acquisition requirement is recognized from the voice, a response to the voice is determined based on the acquired images. In this way, photo taking and recognition of the image acquisition requirement are implemented in parallel to some extent, which is beneficial to reducing the waiting time for the response, and thus improving the naturalness and authenticity of human-computer conversations.

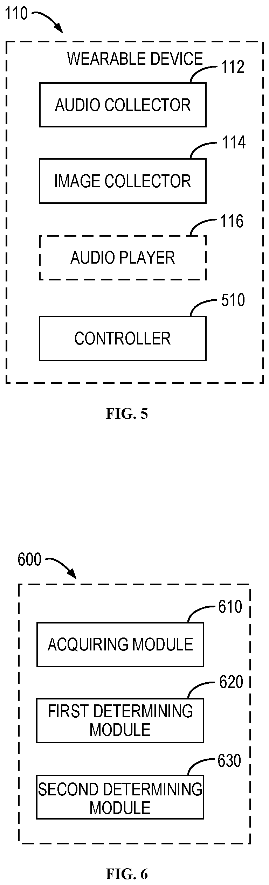

FIG. 5 shows a schematic diagram of an example architecture of the wearable device 110 according to some embodiments of the present disclosure. As shown in FIG. 5, the wearable device 110 includes a controller 510, at least one audio collector 112 and at least one image collector 114. The at least one audio collector 112 is configured to perform audio acquisition under the control of the controller. The at least one image collector 114 is configured to perform image acquisition under the control of the controller. The controller 510 is configured to perform the method described above.

The embodiments of the present disclosure also provide corresponding apparatuses for implementing the above methods or processes. FIG. 6 shows a schematic structural block diagram of an example apparatus 600 for determining a response according to some embodiments of the present disclosure. The apparatus 600 may be implemented as or included in the wearable device 110, the terminal device 120 or the server 130. Each module/component in the apparatus 600 may be implemented by hardware, software, firmware, or any combination thereof.

As shown in FIG. 6, the apparatus 600 includes: an acquiring module 610 configured to acquire, by a wearable device, a first set of images in response to the wearable device detecting a first voice; a first determining module 620 configured to determine whether the first voice indicates an image acquisition requirement; and a second determining module 630 configured to determine, based at least on the first set of images and the first voice, a response output by the wearable device in response to a determination that the first voice indicates the image acquisition requirement.

In some embodiments, the second determination unit 630 is further configured to: determine, based on the first voice, a requirement for images acquired by the wearable device in response to the first voice indicating the image acquisition requirement; and determine, based on the first set of images and the first voice, the response in response to the first set of images satisfying the requirement.

In some embodiments, the second determining unit 630 is further configured to: in response to the first set of images not satisfying the requirement, select, based on the requirement, at least one image from a second set of images acquired by the wearable device prior to the first set of images, or acquire, based on the requirement, a third set of images by the wearable device; and determine the response output by the wearable device based on the first voice and at least one of the at least one image or the third set of images.

In some embodiments, the apparatus 600 is implemented as or included at the wearable device, and the wearable device is communicatively connected to a terminal device, and the second determining module 630 is further configured to: send a first request to the terminal device in response to the first voice indicating the image acquisition requirement, the first request including at least the first voice; and receive a response to the first voice from the terminal device.

In some embodiments, the apparatus 600 further includes: a transmitting module configured to transmit the first set of images to the terminal device in response to a determination that the first set of images have been acquired, or configured to transmit the first set of images to the terminal device in response to a determination that the first voice indicates the image acquisition requirement.

In some embodiments, the second determining module 630 is further configured to: determine whether the first set of images have been transmitted to the terminal device in response to a determination that the first voice indicates the image acquisition requirement; acquire, by the wearable device, a fourth set of images in response to a determination that the first set of images have been transmitted to the terminal device; and send the first request to the terminal device, the first request including at least the first voice and the fourth set of images.

In some embodiments, the response is determined by a trained first machine learning model based at least on the first set of images and the first voice.

In some embodiments, the apparatus 600 is implemented as or included at the terminal device communicatively connected to the wearable device, and the second determining module 630 is further configured to: send, based at least on the first set of images, a second request to a server in response to a determination that the first voice indicates the image acquisition requirement, the second request including at least the first voice and the first set of images; receive the response to the first voice from the server; and send the response to the wearable device.

In some embodiments, the first determining module 620 is further configured to implement at least one of the following: detecting whether the first voice includes a keyword indicating the image acquisition requirement, or determining, using a trained second machine learning model, whether the first voice indicates the image acquisition requirement.

In some embodiments, the apparatus 600 is implemented as or included at the wearable device, and the acquiring module 610 is further configured to: determine, in response to the wearable device detecting the first voice, whether a fifth set of images are being transmitted between the wearable device and the terminal device; determine, in response to a determination that the fifth set of images are being transmitted between the wearable device and the terminal device, whether the fifth set of images correspond to a second voice detected prior to the first voice; in response to a determination that the fifth set of images correspond to the second voice, stop transmission of the fifth set of images; and acquire the first set of images by the wearable device.

In some embodiments, the apparatus 600 further includes at least one of: a first prompt module configured to output, by the wearable device, a first prompt to prompt acquisition of the first set of images by the wearable device, or a second prompt module configured to output, by the wearable device, a second prompt in response to a determination that the first set of images lack content described by the first voice, the second prompt being used to prompt a user to trigger acquisition of images.

In some embodiments, the wearable device includes glasses or a headphone with a camera.

The units and/or modules included in the apparatus 600 may be implemented in various ways, including software, hardware, firmware, or any combination thereof. In some embodiments, one or more units and/or modules may be implemented using software and/or firmware, such as machine executable instructions stored on a storage medium. In addition to machine executable instructions or as an alternative, some or all units and/or modules in the apparatus 600 may be implemented at least partially by one or more hardware logic components. As an example, rather than a limitation, example types of hardware logic components that may be used include field programmable gate array (FPGA), application specific integrated circuit (ASIC), application specific standard (ASSP), system on chip (SOC), complex programmable logic device (CPLD), and the like.

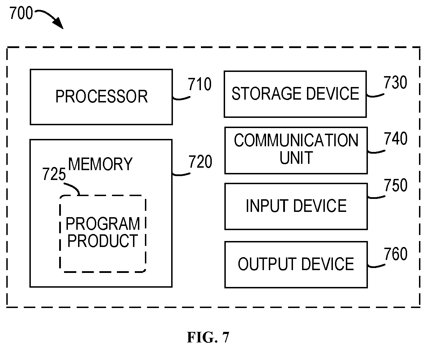

FIG. 7 shows a block diagram of an electronic device 700 in which one or more embodiments of the present disclosure may be implemented. It should be appreciated that the electronic device 700 shown in FIG. 7 is only illustrative, and should not constitute any limitation to the function and scope of the embodiments described herein. The electronic device 700 shown in FIG. 7 may include or be implemented as the wearable device 110, the terminal device 120 or the server 130 in FIG. 1, or the apparatus 600 in FIG. 6.

As shown in FIG. 7, the electronic device 700 is in the form of a general electronic device. The components of the electronic device 700 may include, but are not limited to, one or more processors or processing units 710, a memory 720, a storage device 730, one or more communication units 740, one or more input devices 750, and one or more output devices 760. The processor 710 may be an actual or virtual processor and may perform various processes based on computer-executable instructions stored in the memory 720. In a multiprocessor system, multiple processors execute the computer-executable instructions in parallel to improve the parallel processing capability of the electronic device 700.

The electronic device 700 typically includes multiple computer storage medium. Such medium may be any available medium accessible by the electronic device 700, including but not limited to volatile and non-volatile medium, removable and non-removable medium. The memory 720 may be volatile memory (for example, a register, cache, a random access memory (RAM)), a non-volatile memory (such as a read-only memory (ROM), an electrically erasable programmable read-only memory (EEPROM), a flash memory), or any combination thereof. The storage device 730 may be any removable or non-removable medium, and may include a machine-readable medium such as a flash drive, a disk, or any other medium, which may be used to store information and/or data and may be accessed within the electronic device 700.

The electronic device 700 may further include additional removable/non-removable, volatile/non-volatile memory medium. Although not shown in FIG. 7, a disk driver for reading from or writing to a removable, non-volatile disk (such as a "floppy disk"), and an optical disk driver for reading from or writing to a removable, non-volatile optical disk may be provided. In these cases, each driver may be connected to a bus (not shown) by one or more data medium interfaces. The memory 720 may include a computer program product 725, which has one or more computer-executable instruction modules configured to perform various methods or acts of various embodiments of the present disclosure.

The communication unit 740 enables communication with other electronic devices through a communication medium. Additionally, the functions of the components of the electronic device 700 may be implemented by a single computing cluster or multiple computing machines, which may communicate through a communication connection. Therefore, the electronic device 700 may use a logical connection with one or more other servers, a network personal computer (PC) or another network node to operate in a networked environment.

The input device 750 may be one or more input devices, such as a mouse, a keyboard, a tracking ball, etc. The output device 760 may be one or more output devices, such as a display, a speaker, a printer, etc. The electronic device 700 may also communicate with one or more external devices (not shown) such as a storage device, a display device, etc. via the communication unit 740 as needed, communicate with one or more devices that enable the user to interact with the electronic device 700, or communicate with any devices (e.g., a network card, a modem, etc.) that enable the electronic device 700 to communicate with one or more other electronic devices. Such communication may be performed via input/output (I/O) interfaces (not shown).

According to an illustrative implementation of the present disclosure, a computer-readable storage medium is provided, having computer-executable instructions stored thereon, the computer-executable instructions being executed by a processor to implement the method described above. According to an illustrative implementation of the present disclosure, a computer program product is further provided, the computer program product is tangibly stored on a non-transitory computer-readable storage medium and includes computer-executable instructions, the computer-executable instructions being executed by a processor to implement the method described above.

Various aspects of the present disclosure are described herein with reference to the flowcharts and/or block diagrams of the method, the apparatus, the device, and the computer program product implemented according to the present disclosure. It should be appreciated that each block of the flowcharts and/or block diagrams, and the combination of blocks in the flowcharts and/or block diagrams may be implemented by computer-executable instructions.

These computer-executable instructions may be provided to a processor of a general-purpose computer, a special-purpose computer, or other programmable data processing apparatus to produce a machine, such that these instructions, when executed by the processor of the computer or other programmable data processing apparatus, create means for implementing the functions/acts specified in one or more blocks of the flowcharts and/or block diagrams. These computer-executable instructions may also be stored in a computer-readable storage medium, the instructions cause the computer, the programmable data processing apparatus, and/or other devices to work in a specific manner, and thus, the computer-readable storage medium storing the instructions includes an article of manufacture, which includes instructions for implementing various aspects of the functions/acts specified in one or more blocks of the flowcharts and/or block diagrams.

The computer-executable instructions may be loaded onto a computer, another programmable data processing apparatus, or other devices, such that a series of operations and steps are performed on the computer, the other programmable data processing apparatus, or the other devices to generate a computer-implemented process, and thus, the instructions executed on the computer, the other programmable data processing apparatus, or the other devices implement the functions/acts specified in one or more blocks of the flowcharts and/or block diagrams.

The flowcharts and block diagrams in the drawings show the possibly implemented architectures, functions, and operations of the system, the method, and the computer-executable instruction product according to multiple implementations of the present disclosure. In this regard, each block in the flowchart or block diagram may represent a module, an executable instruction or a part of an executable instruction, and the module, the executable instruction or the part of the executable instruction contains one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagrams and/or flowcharts, and the combination of blocks in the block diagrams and/or flowcharts may be implemented by a special-purpose hardware-based system that perform specified functions or acts, or may be implemented by a combination of special-purpose hardware and computer instructions.

The implementations of the present disclosure have been described above, and the above description is illustrative, non-exhaustive, and not limited to the disclosed implementations. Without departing from the scope of the illustrated implementations, many modifications and changes will be apparent to those of ordinary skill in the art. The terms used herein are chosen to best explain the principles of the implementations, the practical applications, or the improvements to the technologies in the market, or to enable other ordinary skilled artisans in the art to understand the implementations disclosed herein.

## Claims

1. A method (200) for determining a response, comprising:
acquiring (210), by a wearable device (110), a first set of images in response to the wearable device (110) detecting a first voice;
determining (220) whether the first voice indicates an image acquisition requirement; and
determining (230), based at least on the first set of images and the first voice, a response output by the wearable device (110) in response to a determination that the first voice indicates the image acquisition requirement.

2. The method (200) of claim 1, wherein determining (230) the response output by the wearable device (110) comprises:
determining, based on the first voice, a requirement for images acquired by the wearable device (110) in response to the first voice indicating the image acquisition requirement; and
determining, based on the first set of images and the first voice, the response in response to the first set of images satisfying the requirement, and optionally, further comprising:
in response to the first set of images not satisfying the requirement,
selecting, based on the requirement, at least one image from a second set of images acquired by the wearable device (110) prior to the first set of images, or
acquiring, based on the requirement, a third set of images by the wearable device (110), and
determining the response output by the wearable device (110) based on the first voice and at least one of the at least one image or the third set of images.

3. The method (200) of claim 1, wherein the method (200) is implemented at the wearable device (110) and the wearable device (110) is communicatively connected to a terminal device (120), and wherein determining the response output by the wearable device (110) comprises:
sending a first request to the terminal device (120) in response to the first voice indicating the image acquisition requirement, the first request comprising at least the first voice; and
receiving the response to the first voice from the terminal device (120), and optionally, further comprising:
transmitting the first set of images to the terminal device (120) in response to a determination that the first set of images have been acquired, or
transmitting the first set of images to the terminal device (120) in response to a determination that the first voice indicates the image acquisition requirement.

4. The method (200) of claim 3, wherein sending the first request to the terminal device (120) comprises:
determining whether the first set of images have been transmitted to the terminal device (120) in response to a determination that the first voice indicates the image acquisition requirement;
acquiring, by the wearable device (110), a fourth set of images in response to a determination that the first set of images have been transmitted to the terminal device (120); and
sending the first request to the terminal device (120), the first request comprising at least the first voice and the fourth set of images.

5. The method (200) of any of claims 1 to 4, wherein the response is determined by a trained first machine learning model based at least on the first set of images and the first voice.

6. The method (200) of claim 1, wherein the method is implemented at a terminal device (120) communicatively connected to the wearable device (110), and wherein determining (230) the response output by the wearable device (110) comprises:
sending, based at least on the first set of images, a second request to a server in response to a determination that the first voice indicates the image acquisition requirement, the second request comprising at least the first voice and the first set of images;
receiving the response to the first voice from the server; and
sending the response to the wearable device (110).

7. The method (200) of claim 1, wherein determining (220) whether the first voice indicates the image acquisition requirement comprises at least one of:
detecting whether the first voice comprises a keyword indicating the image acquisition requirement, or
determining, using a trained second machine learning model, whether the first voice indicates the image acquisition requirement.

8. The method (200) of claim 1, wherein the method is implemented at the wearable device (110), and wherein acquiring (210), by the wearable device (110), the first set of images comprises:
determining, in response to the wearable device (110) detecting the first voice, whether a fifth set of images are being transmitted between the wearable device (110) and a terminal device (120);
determining, in response to a determination that the fifth set of images are being transmitted between the wearable device (110) and the terminal device (120), whether the fifth set of images correspond to a second voice detected prior to the first voice;
in response to a determination that the fifth set of images correspond to the second voice,
stopping transmission of the fifth set of images, and
acquiring the first set of images by the wearable device (110).

9. The method (200) of claim 1, further comprising at least one of:
outputting, by the wearable device (110), a first prompt to prompt acquisition of the first set of images by the wearable device (110), or
outputting, by the wearable device (110), a second prompt in response to a determination that the first set of images lack content described by the first voice, the second prompt being used to prompt a user to trigger acquisition of images.

10. The method (200) of any of claims 1 to 9, wherein the wearable device (110) comprises glasses or a headphone with a camera.

11. A wearable device (110), comprising:
a controller (510) configured to perform the method (200) of any of claims 1 to 12;
at least one audio collector (112) configured to perform acquisition of audios under control of the controller (510); and
at least one image collector (114) configured to perform acquisition of images under control of the controller (510).

12. An apparatus (600) for determining a response, comprising:
an acquiring module (610) configured to acquire, by a wearable device (110), a first set of images in response to the wearable device (110) detecting a first voice;
a first determining module (620) configured to determine whether the first voice indicates an image acquisition requirement; and
a second determining module (630) configured to determine, based at least on the first set of images and the first voice, a response output by the wearable device (110) in response to a determination that the first voice indicates the image acquisition requirement.

13. An electronic device (700), comprising:
at least one processor (710); and
at least one memory (720) coupled to the at least one processor (710) and storing instructions executable by the at least one processor (710), the instructions, when executed by the at least one processor (710), causing the electronic device (700) to perform the method (200) of any of claims 1 to 12.
